# EUROPEAN PATENT SPECIFICATION

(11) **EP 2 445 756 B1**
(45) Date of publication and mention of the grant of the patent: **06.03.2013**
(21) Application number: 09786444.1
(22) Date of filing: 23.06.2009
(51) Int. Cl.: B60R 7/06, E05D 3/14

(54) **GLOVE COMPARTMENT**
HANDSCHUHFACH
BOÎTE À GANTS

(43) Date of publication of application: 02.05.2012
(73) Proprietor: Tofas Turk Otomobil Fabrikasi Anonim Sirketi, 16369 Bursa (TR)
(72) Inventor: AYARTURK, Hasan, 16369 Bursa (TR)
(74) Representative: Dericioglu, Ekin
(86) International application number: PCT/IB2009/052685
(87) International publication number: WO 2010/150049

(56) References cited:
- EP-A1- 1 197 384
- EP-A2- 1 275 567
- EP-B1- 0 184 620
- DE-A1- 3 432 739
- DE-A1- 4 243 791
- DE-C1- 3 926 425

## Description

### Field of the Invention

The present invention relates to a glove compartment used in vehicles, which enables storing objects in the vehicle.

### Background of the Invention

Glove compartments are compartments useful for storing objects in the vehicle. These compartments are located in the interior of the vehicle in front of the front-seat passenger. Glove compartments have folding covers. A lock mechanism is required for the cover to remain in closed position. This lock mechanism generates noise due to the vibrations in the vehicle, and vibration damping materials are required to be used at the perimeter of the cover in order to prevent this noise.

In the event of a possible accident, the glove compartment is the region on which the front passenger's knees impact. Hence it is one of the most important goals in designs of glove compartments to ensure that the passenger is saved from these knee impacts with minimum injury.

Today, in the glove compartments used in vehicles, methods like using deformable designs, additional materials made of shock-absorbing materials, disposing air bag to the cover of the glove compartment are used to damp the shock load of the knee impacts. The additional methods that are used considerably increase the production costs of the glove compartments.

The German patent document DE4243791, in the prior art, discloses a knee protection support. The knee support is located below the glove compartment. The support is fixed to the vehicle by means of an impact absorber and two struts from the lower part. The support is retracted inwards during a collision, preventing injuries that might result from the knee impact.

The glove compartment disclosed in the French patent document FR2764255, in the prior art, is fixed by means of a spring and requires a lock mechanism. It does not suggest a solution for the passenger's safety.

In between the glove compartment disclosed in the German patent document DE10055051, in the prior art, and the frame thereof, there is provided a piece, which is made of a material deformable in case of a knee impact.

The glove compartment disclosed in the German patent document DE102004005494, in the prior art, is comprised of two telescopic pieces. In the event of an impact, these two pieces are telescoped and move to the cavity behind the glove compartment.

An air bag is mounted on the glove compartment in the United States patent US 6 302 437. The air bag inflates during the accident reducing the intensity of the collision.

EP 184 620 B shows a glove compartment according to the preamble of claim 1, its cover having a spring and two connecting members.

### Summary of the Invention

The objective of the present invention is to provide a glove compartment by which the intensity of the impact on the knee is reduced by having its cover enter inside upon knee impact.

Another objective of the invention is to provide a glove compartment which does not require a lock mechanism to remain in closed position.

A further objective of the invention is to provide a glove compartment whose production and assembly costs are reduced.

The invention resides in the glove compartment of claim 1.

### Detailed Description of the Invention

A glove compartment developed to attain the objectives of the present invention is illustrated in the accompanying drawings, wherein,
Figure 1 is the schematic side view of the closed position of the inventive glove compartment.
Figure 2 is the schematic side view of the position of the glove compartment before it is opened.

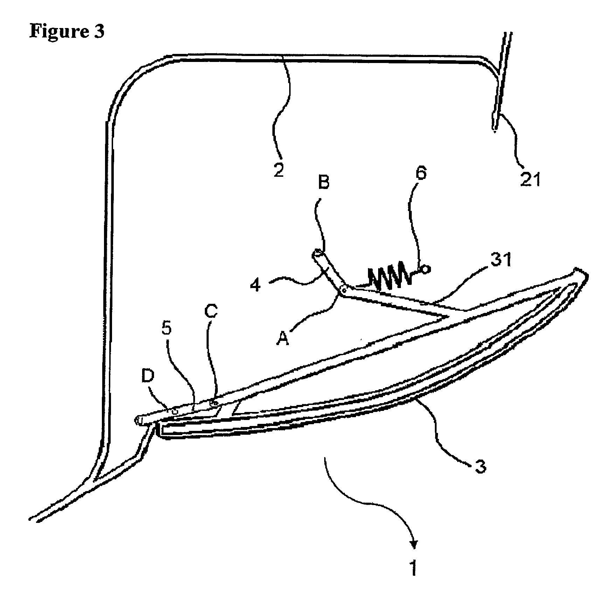

Figure 3 is the schematic side view of the open position of the glove compartment.
Figure 4 is the schematic side view of the glove compartment retracted at the time of the impact.
Figure 5 is the magnified view of the connection between the first connecting member and the cover.
Figure 6 is the view of the protrusion about to leave the recess.

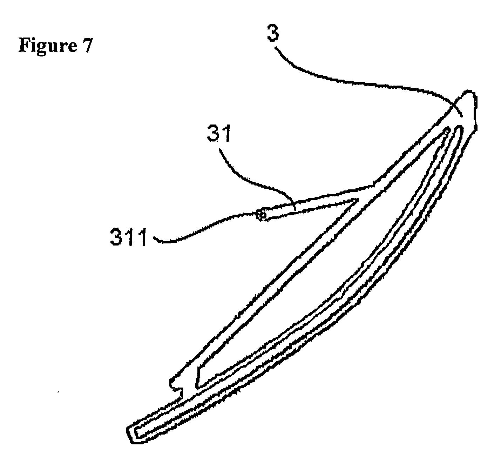

Figure 7 is the schematic side view of the cover.

1- Glove compartment
2- Body
   21- Retainer
3- Cover
   31- Extension
   311- Protrusion
4- First connecting member
   41- Recess
5- Second connecting member
6- Spring
A, B- ends of the first connecting member
C, D- ends of the second connecting member

The inventive glove compartment (1) comprises at least one body (2), which is shaped like a cove and disposed such that it will face the front-seat passenger, and which has an opening at its side facing the passenger and has a retainer (21) at the upper edge thereof facing the interior of the vehicle,
and at least one cover (3) which has on its inner part
- at least one extension (31) having at least one protrusion (311),
- at least one first connecting member (4), one end (B) of which is connected to the side surface of the body (2), while the other end (A) is connected to the extension (31) via a revolute joint,
- at least one second connecting member (5), one end (D) of which is connected to the lower edge of the body (2) facing the interior of the vehicle, while the other end (C) is connected to the lower part of the inner surface of the cover (3) via a revolute joint,
- at least one spring (6) one end of which is connected to the body (2) while the other to the extension (31);
covers the opening on the body (2); and opens towards the inside of the vehicle upon rotating around the axis of its lower edge.

The body (2) is fixed to the vehicle. The inner portion of the body (2) is designed as a cavity so as to allow storing objects therein and to enable that the cover (3) can be retracted to the inner portion of the body in case of an accident. The retainer (21) is a lug to which the cover (3) in closed position abuts, and it retains the cover (3) in this position.

The extension (31) is in the form of a rod one end of which is fixed to the inner surface of the cover (3) and the other extending towards the body (2). There is provided at least one protrusion (311) at the exposed end of the extension (31). One end (A) of the first connecting member (4) and one end of the spring (6) are connected to the protrusion (311).

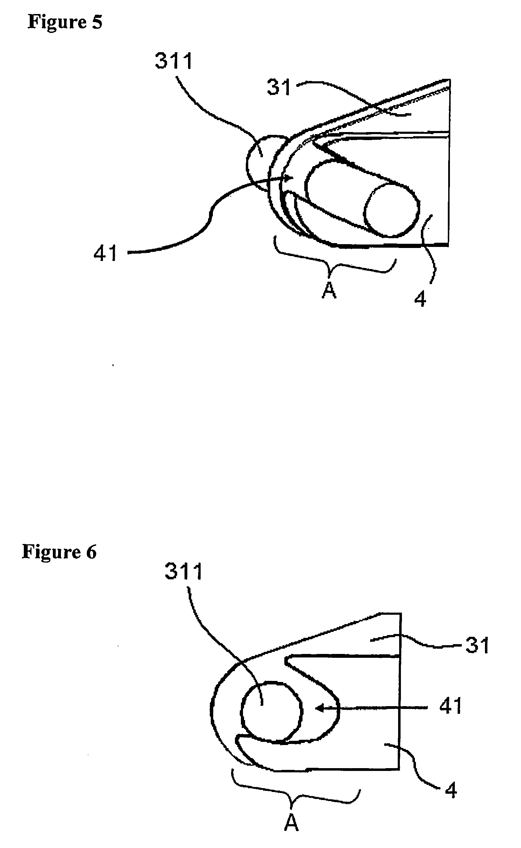

The end (A) of the first connecting member (4) connected to the protrusion (311) comprises a recess (41) in the form of a "C" (Figure 5). Connection of the extension (31) with the first connecting member (4) is provided upon fitting of the said protrusion (311) into the recess (41).

In the preferred embodiment of the invention, the first connecting member (4) is made of a resilient material.

In one embodiment of the invention, there are two springs (6), extensions (31) and connecting members (4, 5) provided one of each at the right and left of the cover (3).

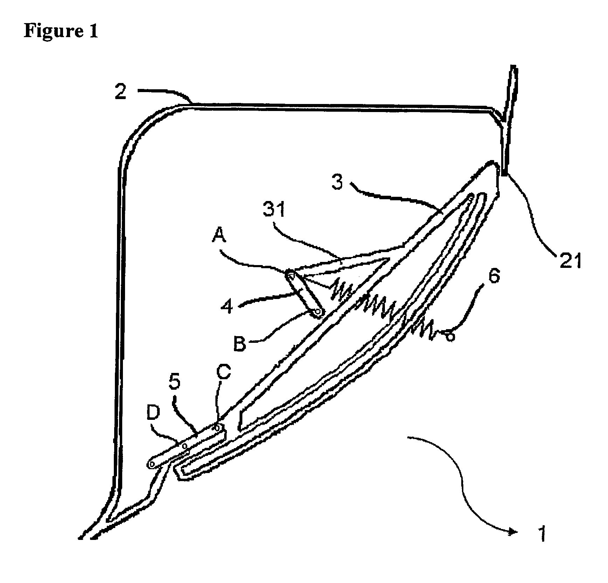

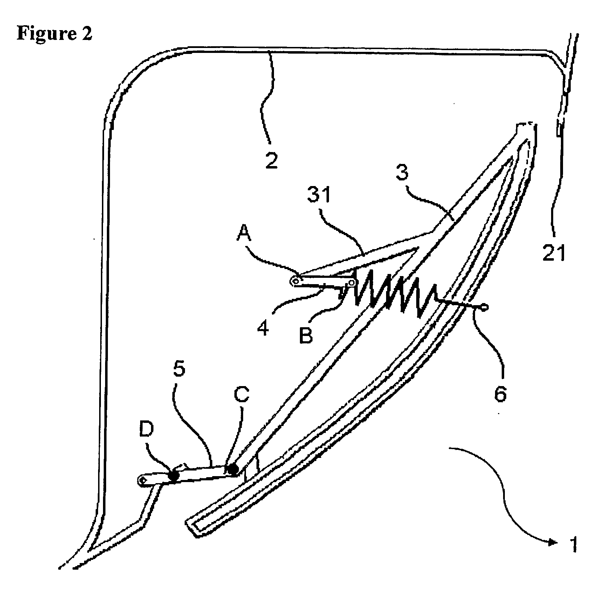

When the glove compartment (1) is in the closed position, the spring (6) presses the cover (3) against the retainer (21) by exerting a force (F) towards the inner part of the vehicle (Figure 1). In order to open the glove compartment, the cover (3) is required to be pushed towards the inner portion of the body (2) with mild force (5 - 10N). When the cover (3) is pushed from outside, the spring (6) and the first connecting member (4) rotate downwards around the axes formed by their fixed ends. As the spring (6) passes the end of the first connecting member (4) connected to the body (2), the direction of the moment applied to the first connecting member (4) changes. In the meantime, upon rotation of the second connecting member (5) in the opening direction of the cover (3), the end (C) thereof connected to the cover (3) descends. Hence, the cover (3) descends to a certain extent whereby getting released from the retainer (21) (Figure 2). Having been released from the retainer (21), the cover (3) is opened by means of the tensile strength of the spring (6).

In order to close the cover (3), force is applied on the cover (3) towards the body (2). As the spring (6) passes the end of the first connecting member (4) connected to the body (2) during closing, just like during opening, the direction of the moment applied to the first connecting member (4) changes and the spring (6) pushes the cover (3) until it contacts the retainer (21). Thus the cover (3) is closed by abutting on the retainer (21).

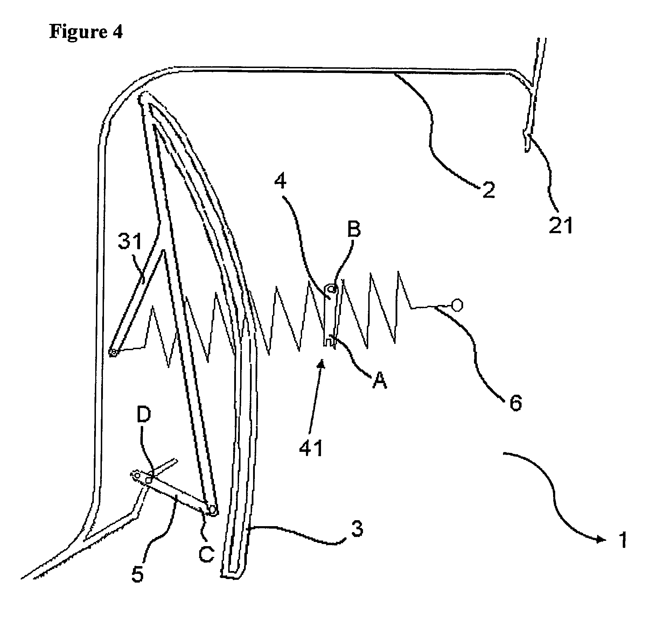

In the event of a possible accident, upon exertion of an intense force from outside like the knee of the passenger hitting the cover (3), the cover (3) enters into the cavity within the body (2). In the meantime the spring (6) extends exerting a force at the opposite direction of the impact force and reduces the intensity of the impact in comparison to the covers wherein a lock mechanism is used to maintain the covers in closed position. If it is continued to exert force onto the cover (3) towards the cavity, as the protrusion (311) is released from the recess (41), the first connecting member (4) disengages from the extension (31). This way, the cover (3) can proceed until the rear wall of the body (2), whereby the injury that may occur on the knee of the passenger during the accident is minimized (Figure 4).

After the first connecting member (4) is disengaged from the extension (31), as the protrusion (311) is engaged into the recess (41), the cover (3) returns to its folding position.

No lock mechanism is needed for opening or closing the glove compartment (1) or for it to remain in these positions. This way, both the production costs are reduced and assembly time is minimized. The spring (6) also serves as a shock absorber, whereby eliminating the need for expensive and complicated systems and reducing the costs. Thus, a glove compartment with an enhanced passenger safety can be obtained with low costs.

## Claims

1. A glove compartment (1) used in vehicles,
comprising at least one cove-shaped body (2), which is disposed such that it will face the front-seat passenger and which has an opening at its side facing the passenger, and at least one cover (3) which covers the opening on the body (2) and opens towards the inside of the vehicle upon rotating around the axis of its lower edge; **characterized by** a body (2) having a retainer (21) at the upper edge thereof facing the interior of the vehicle on which the cover (3) in closed position abuts, and by a cover (3) which has in its inner part
- at least one extension (31) having at least one protrusion (311),
- at least one first connecting member (4), one end (B) of which is connected to the side surface of the body (2), while the other end (A) is connected to the extension (31) via a revolute joint, and which has a "C" shaped recess (41) at one end thereof where the protrusion (311) fits into.
- at least one second connecting member (5), one end (D) of which is connected to the lower edge of the body (2) facing the interior of the vehicle, while the other end (C) is connected to the lower part of the inner surface of the cover (3) via a revolute joint,
- at least one spring (6) one end of which is connected to the vehicle while the other to the extension (31);
- the cover (3) entering into the cavity within the body (2) and proceeding until the rear wall of the body (2) upon release of the protrusion (311) from the recess (41) when an intense force is exerted from outside.

2. A glove compartment (1) according to Claim 1, **characterized by** a rod-shaped extension (31) one end of which is fixed to the inner surface of the cover (3) and the other extending towards the body (2).

3. A glove compartment (1) according to Claim 1 or 2, **characterized by** a protrusion (311) provided at the exposed end of the extension (31).

4. A glove compartment (1) according to any of the Claims 1 to 3, **characterized by** a protrusion (311) to which one end (A) of the first connecting member (4) and one end of the spring (6) are connected.

5. A glove compartment (1) according to any of the Claims 1 to 4, **characterized by** a first connecting member (4) made of a resilient material.

6. A glove compartment (1) according to any of the Claims 1 to 5, **characterized by** a cover (3) having two springs (6), extensions (31), first connecting members (4) and second connecting members (5) provided one of each at the right and left thereof.

7. A glove compartment (1) according to any of the Claims 1 to 6, **characterized by** a spring (6) and first connecting member (4), which rotate downwards around the axes formed by their fixed ends when the cover (3) is pushed from outside to be opened.

8. A glove compartment (1) according to Claim 7, **characterized by** a second connecting member (5), which rotates in the opening direction of the cover (3) whereupon its end (C) connected to the cover (3) descends.

## Patentansprüche

1. Ein Handschuhfach (1) zur Anwendung in Fahrzeugen, umfassend mindestens ein Gehäuse (2) in Form einer Ausnehmung, das so angeordnet ist, dass es dem Beifahrer zugewandt ist und eine Öffnung auf seiner dem Beifahrer zugewandten Seite aufweist und mindestens einen Deckel, der die Öffnung auf dem Gehäuse bedeckt und durch Drehung um die Achse der unteren Kante gegen die Innenseite des Fahrzeuges geöffnet wird, **gekennzeichnet durch** ein Gehäuse, welches an seiner oberen Kante eine Halterung (21) aufweist, die dem Innenraum des Fahrzeuges zugewandt ist und an die der Deckel (3) in geschlossenem Zustand anliegt und **durch** einen Deckel, der in seinem inneren Teil aufweist
- mindestens eine Verlängerung, die mindestens einen Vorsprung (311) aufweist,
- mindestens ein Anschlusselement (4), dessen ein Ende (B) mit der Seitenfläche des Gehäuses (2) verbunden ist, während das andere Ende (A) über ein Drehgelenk an die Verlängerung angeschlossen wird, das auf seinem einen Ende eine "C" förmige Ausnehmung (41) aufweist, in die der Vorsprung (311) einpasst,
- mindestens ein zweites Anschlusselement (5), dessen ein Ende (D) mit der unteren Kante des Gehäuses (2) verbunden ist, welche dem Innenraum des Fahrzeuges zugewandt ist, während das andere Ende (C) über ein Drehgelenk mit dem unteren Teil der Innenfläche des Deckels (3) verbunden ist,
wobei der Deckel (3) in die Ausnehmung im Gehäuse (2) eingesetzt wird und wenn eine starke Kraft vom Außen angewendet wird, **durch** Auslösung des Vorsprungs (311) aus der Ausnehmung (41) bis zur hinteren Wand des Gehäuses (2) verläuft,
- mindestens eine Feder (6), deren ein Ende an das Fahrzeug angeschlossen wird, während das andere Ende mit der Verlängerung (31) verbunden ist.

2. Ein Handschuhfach (1) nach Anspruch 1, **gekennzeichnet durch** eine stabförmige Verlängerung (31), deren ein Ende an der Innenseite des Deckels (3) befestigt ist und das andere Ende jedoch sich bis zum Gehäuse (2) erstreckt.

3. Ein Handschuhfach (1) nach Anspruch 1 oder 2, **gekennzeichnet durch** einen Vorsprung (311), der auf dem offenen Ende einer Verlängerung (31) vorgesehen ist.

4. Ein Handschuhfach (1)nach einem der Ansprüche 1 bis 3, **gekennzeichnet durch** einen Vorsprung (311), mit dem das ein Ende (A) des ersten Anschlusselements (4) und ein Ende der Feder (6) verbunden sind,

5. Ein Handschuhfach (1) nach einem der Ansprüche 1 bis 4, **gekennzeichnet durch** ein erstes Anschlusselement (4), welches aus einem elastischen Material gebildet ist,

6. Ein Handschuhfach (1) nach einem der Ansprüche 1 bis 5, **gekennzeichnet durch** einen Deckel (3), der zwei Feder (6), Verlängerungen (31), erste Anschlusselemente (4) sowie zweite Anschlusselemente (5) aufweist, die je auf rechter und linker Seite davon vorgesehen sind,

7. Ein Handschuhfach (1) nach einem der Ansprüche 1 bis 6, **gekennzeichnet durch** eine Feder (6) und ein erstes Anschlusselement (4), das um die **durch** seine befestigten Enden gebildete Achse nach unten verdreht, wenn auf den Deckel (3) vom Außen gedrückt wird um ihn aufzumachen.

8. Ein Handschuhfach (1) nach Anspruch 7, **gekennzeichnet durch** ein zweites Anschlusselement (5), welches in Öffnungsrichtung des Deckels (3) verdreht wird, wobei sein an den Deckel (3) angeschlossenes Ende (C) gesenkt wird.

## Revendications

1. Une boîte à gants (1) utilisée dans les véhicules, comportant au moins un corps (2) en forme de renfoncement placé dans une manière faisant face au passager avant et possédant une ouverture sur la côté en face de passager, et au moins un couvercle couvrant l'ouverture sur le corps (2) et s'ouvrant vers l'intérieure du véhicule en tournant autour de l'axe de son côté inférieure ; **caractérisée par** un corps (2) possédant une retenue sur son bord supérieure faisant face à l'intérieur du véhicule sur laquelle s'appuie le couvercle (3) dans la position fermée, et par un couvercle possédant dans sa partie intérieure
- Au moins une extension (31) comportant au moins une saillie (311),
- Au moins un élément de raccordement (4) dont est liée une extrémité (B) à la surface latérale du corps (2) pendant que l'autre extrémité (A) est liée à l'extension (31) par un joint tournant, et qui est placé dans la saillie (311) et possédant un renfoncement en forme de « C » à l'une de ses extrémités,
- Au moins un deuxième élément de raccordement (5) dont est liée une extrémité (D) au bord inférieure du corps (2) faisant face à l'intérieur du véhicule pendant que l'autre extrémité (C) est liée à la partie inférieure de la surface intérieure du couvercle (3) par un joint tournant,
- Un couvercle (6) entrant dans la cavité à l'intérieure du corps (2) et s'avançant jusqu'au mur derrière du corps (2) en laissant la saillie (311) du renfoncement (41) quand on y applique une force puissante de l'extérieur, et
- Au moins un ressort (6) dont est liée une extrémité au véhicule pendant que l'autre extrémité est liée à l'extension (31).

2. Une boîte à gants (1) selon la revendication 1, **caractérisée par** l'extension (31) en forme de barre dont est fixée une extrémité à la surface intérieure du couvercle (3) et l'autre extrémité s'étend vers le corps (2).

3. Une boîte à gants (1) selon les revendications 1 ou 3, **caractérisée par** une saillie (311) fournie à l'extrémité ouverte d'une extension (31).

4. Une boîte à gants (1) selon les revendications 1 ou 3, **caractérisée par** une saillie (311) à laquelle sont liées une extrémité (A) du premier élément de raccordement (4) et une extrémité du ressort (6).

5. Une boîte à gants (1) selon l'une quelconque des revendications 1 à 4, **caractérisée par** premier élément de raccordement (4) réalisé en matériau élastique.

6. Une boîte à gants (1) selon l'une quelconque des revendications 1 à 5, **caractérisée par** un couvercle (3) comportant deux ressorts (6), extensions (31), premier éléments de raccordement et deuxième éléments de raccordement (5) fournis à droit et gauche de chacun d'eux.

7. Une boîte à gants (1) selon l'une quelconque des revendications 1 à 6, **caractérisée par** un ressort (6) tournant vers le bas autour de l'axe formé par ses extrémités fixes quand le couvercle (3) est poussé de l'extérieur afin d'être ouverte, et par premier élément de raccordement (4).

8. Une boîte à gants (1) selon la revendication 7, **caractérisée par** un deuxième élément de raccordement (5) dont est liée son extrémité (C) au couvercle (3) descendant vers le bas, et tournant dans le sens d'ouverture du couvercle (3).
